# EUROPEAN PATENT SPECIFICATION

(11) **EP 4 441 456 B1**
(45) Date of publication and mention of the grant of the patent: **11.02.2026**
(21) Application number: 22829753.7
(22) Date of filing: 02.12.2022
(51) Int. Cl.: F28F 3/00, F28F 21/06

(54) **PLASTIC METAL HYBRID COOLING TRAY WITH TURBULATORS FOR EV BATTERY MODULE**
HYBRIDER KÜHLDECKEL MIT TURBULATOREN FÜR DAS BATTERIEMODUL EINES ELEKTROFAHRZEUGS
COUVERCLE DE REFROIDISSEMENT HYBRIDE COMPORTANT DES GÉNÉRATEURS DE TOURBILLONS POUR MODULE DE BATTERIE DE VÉHICULE ÉLECTRIQUE

(30) Priority: 02.12.2021 EP 21211992
(43) Date of publication of application: 09.10.2024
(73) Proprietor: SABIC Global Technologies B.V., 4612 PX Bergen op Zoom (NL)
(72) Inventor: LI, Tingwen, 6160 GA Geleen (NL); PANNALA, Sreekanth, 6160 GA Geleen (NL); PEREIRA, Carlos Cadena, 6160 GA Geleen (NL); MUNJURULIMANA, Dinesh, 6160 GA Geleen (NL); TIWARI, Anil, 6160 GA Geleen (NL)
(74) Representative: Sabic Intellectual Property Group
(86) International application number: PCT/EP2022/084172
(87) International publication number: WO 2023/099721

(56) References cited:
- CN-A- 113 670 099
- DE-A1- 102013 219 539
- DE-A1- 102017 008 165
- US-A1- 2016 036 104
- US-A1- 2016 049 705

## Description

### BACKGROUND

The embodiments relate to a hybrid cooling tray for an EV (electric vehicle) battery module and more specifically to a hybrid cooling tray with turbulators. The present invention relates, in particular, to a hybrid cooling as defined in the preamble of claim 1, and as illustrated in US2016/049705A1.

A cooling or coolant tray or cover is an important part of a battery thermal management system as it maintains a safe operating temperature of a battery. The cooling tray is typically made of aluminum plates using sheet damping or hydroforming processes. Cost and weight of metal parts can be relatively high. In addition, cost of a manufacturing process can be relatively high, which may prevent an adoption of an optimal design for thermal-hydraulic performance. A relatively inefficient cooling tray design may lead to a low overall efficiency and a non-uniform cooling for the battery module.

US Patent Application Pub. No. 2016/0036104 to Kenney, et al. discloses a cooling plate with turbulizers stamped into a bottom portion.

DE102017008165 to Dragicevic, et al., adds turbulators of differing areal density to the metallic battery cooler of US9531045 to Girmscheid.

CN11367009A to 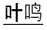 et al., discloses a cooling plate having fins or turbulators the location of which is visible from the exterior of the cooling plate.

### SUMMARY OF THE DISCLOSURE

US Patent Application Pub. No. 2016/0036104 to Kenney, et al., and DE102017008165 to Dragicevic each fail to disclose cooling plates made from something other than stamped metal, thereby failing to unlock the potential of turbulators design. CN11367009A fails to take advantage of a superior battery-to-cooling plate thermal connection provided by a surface with no voids or interuptions. In contrast, the invention relates to a hybrid cooling tray as defined in claim 1.

### BRIEF DESCRIPTION OF THE FIGURES

The present disclosure is illustrated by way of example and not limited in the accompanying figures in which like reference numerals indicate similar elements.
FIG. 1 shows a cooling tray with a battery pack in a typical configuration;
FIG. 2 shows a cooling tray with a battery pack according to an embodiment;
FIG. 3A is a detail of a portion of FIG. 2, showing turbulators that can be protrusions and/or dimples;
FIG. 3B is a segment of a coolant channel of the cooling tray showing turbulators according to an embodiment, where the turbulators can be wedge shaped;
FIG. 3C is a segment of a coolant channel of the cooling tray showing turbulators according to an embodiment, where the turbulators can be cone shaped;
FIG. 3D is a segment of a coolant channel of the cooling tray showing turbulators according to an embodiment, where the turbulators can be dimple shaped;
FIG. 4 is a segment of a coolant channel of the cooling tray showing turbulators according to an embodiment, where the turbulators can be rib shaped;
FIG. 5 is a perspective view of a segment of a coolant channel of the cooling tray showing turbulators according to an embodiment, where the turbulators can be airfoil shaped and transversely adjacent turbulators can be aligned with each other along a channel transverse center axis;
FIG. 6 is a top view of the embodiment of FIG. 5;
FIG. 7 is a perspective view of a segment of a coolant channel of the cooling tray showing turbulators according to an embodiment, where the turbulators can be airfoil shaped and transversely adjacent turbulators can be offset from each other along a channel transverse center axis;
FIG. 8 is a top view of the embodiment of FIG. 7;
FIG. 9 is a perspective view of a segment of a coolant channel of the cooling tray showing turbulators according to an embodiment, where the turbulators can be airfoil shaped and configured so adjacent leading edges of adjacent turbulators along a channel transverse center axis abut each other and trailing edges can be spaced apart from each other;
FIG. 10 is a top view of the embodiment of FIG. 9;
FIG. 11 is an example of a tray considered in a baseline analysis of the effectiveness of a disclosed design;
FIG. 12 is an example of a tray considered against the baseline analysis; and
FIG. 13 shows a temperature gradient along a top plate when designs of FIGS. 11 and 12 are utilized.
FIG. 14 shows a top view of flow-reversing turbulators, according to some examples.
FIG. 15A shows a baseline straight channel.
FIG. 15B shows a rib turbulators, according to an example.
FIG. 15C shows a topology optimized design.
FIG. 16 shows data pertaining to FIGS. 15A-C.

### DETAILED DESCRIPTION

Aspects of the disclosed embodiments will now be addressed with reference to the figures. Aspects in any one figure is equally applicable to any other figure unless otherwise indicated. Aspects illustrated in the figures are for purposes of supporting the disclosure and are not in any way intended on limiting the scope of the disclosed embodiments. Any sequence of numbering in the figures is for reference purposes only.

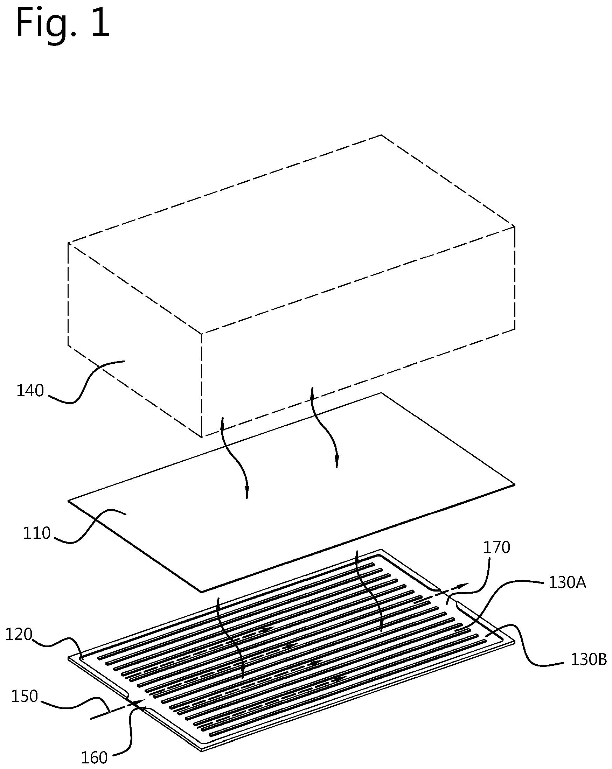

FIG. 1 shows a typical hybrid cooling tray 100 design, which has a (thermally or heat conductive) cover plate 110 and a plastic tray (or base) 120. The tray 120 can have parallel channels 130A, 130B, such as for passing fluid through, such as gas or liquid coolant 135. The cover plate 110 can be made of any heat conductive material, e.g. steel, preferably aluminum. The cover plate 110 and the bottom tray 120 can be bonded couple to define a fluid-tight conduit, such as to prevent coolant leakage. The cover plate 110 and the tray 120 can be coupled by an adhesive. A battery pack 140 can be positioned against the plate 110 and coolant 150 is flowed over the tray 100, from an inlet 160 to an outlet 170, to cool the battery pack 140.

According to embodiments, relatively complex designs of coolant channel layouts can be incorporated to enhance an overall heat transfer performance while maintaining a reasonable pressure drop. Thus, heat transfer enhancement through the utilization of turbulators can be leveraged.

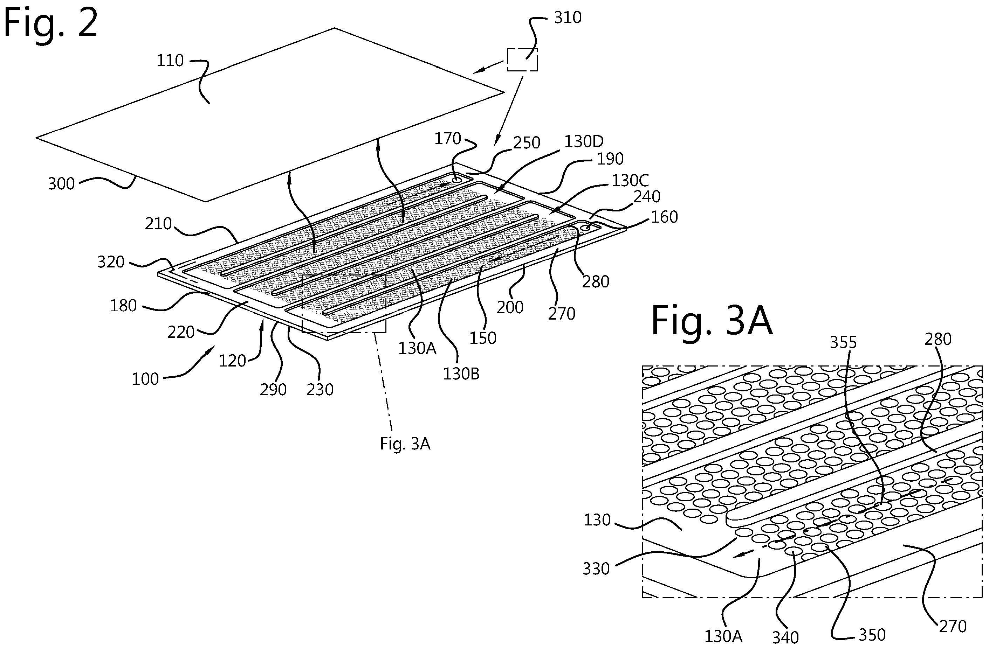

Turning to FIG. 2, according to an embodiment, a hybrid cooling tray 100 is shown. The tray 100 includes a base 120 defining a first end 180 and a second end 190 that can be lengthwise spaced apart from each other. The base 120 includes a first side 200 and a second side 210 that can be widthwise spaced apart from each other. The base 120 defines an inner surface 220 and an outer surface 230.

The inner surface 220 defines a coolant channel (or conduit) 130 that may have a substantially consistent cross section along its length. The coolant channel 130 as shown has a serpentine (or U) shape that defines elongate parallel coolant channels 130A, 130B (also referred to as channels 130A, 130B) that extend lengthwise relative to the base 120 and can be interconnected at squared turns 130C, 130D. The channel 130 has an upstream end 240 configured to receive a coolant flow 150 and a downstream end 250 configured to discharge the coolant flow 150. The upstream and downstream ends 240, 250 of the coolant channel 130 may both be located either at the first end 180 or second end 190 of the base 120. In the illustrated embodiment, the upstream and downstream ends 240, 250 can be located at the second end 190 of the base 120. The upstream end 240 of the coolant channel 130 can include a coolant inlet port 160 and the downstream end 250 of the coolant channel 130 can include a coolant discharge (or outlet) port 170. The channel 130 defines a first transverse side 270 and a second transverse side 280 that extend between the upstream and downstream ends 240, 250 and allow for coolant to flow to the channels 130A, 130B via the turns 130C, 130D.

The base 120 has a base outer perimeter boundary 290 defining an outer perimeter shape. The tray 100 includes the cover plate 110 that has a cover plate outer perimeter boundary 300 that defines an outer perimeter shape that can complement the base outer perimeter shape. The cover plate 110 can be positioned against the base 120 to enclose the coolant channel 130. For example, the cover plate 110 can be bonded to the base 120. Alternatively, the cover plate 110 can be fastened to the base 120, e.g., via a clamp 310 (shown schematically) and a seal member 320 (partially illustrated), which can be an elastomeric ring or gasket, can be disposed between the cover plate 110 and the base 120.

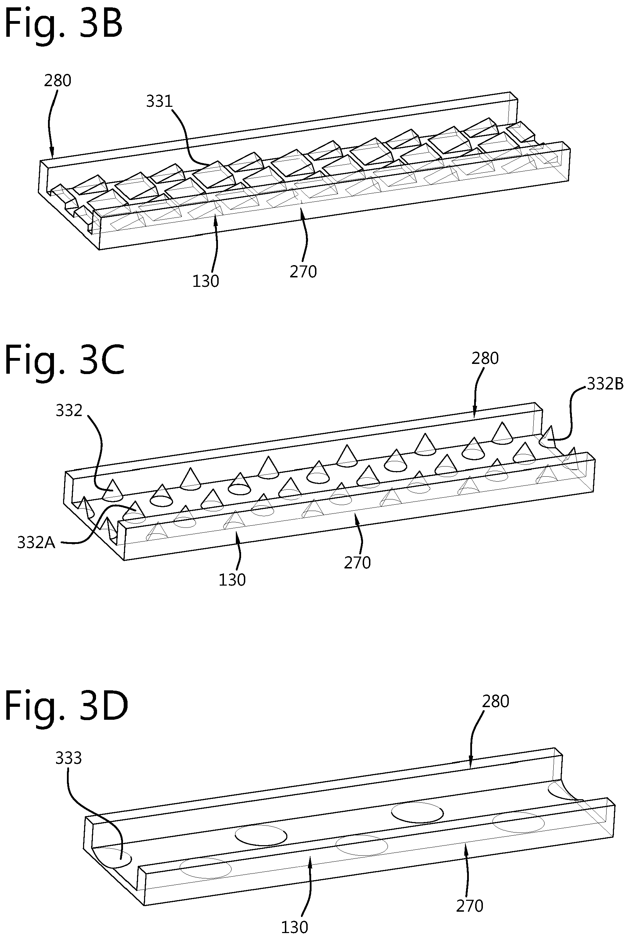

As shown in FIGS. 3A-3D, turbulators 330 can be formed within the coolant channel 130 between the upstream and downstream ends 240, 250 (FIG. 2) and between the first and second transverse sides 270, 280. The turbulators can be solid. The base 120 can be formed of a solid monolith. The base can be injection molded 120. The base can be manufactured by subtractive manufacturing or additive manufacturing. As shown in FIG. 3A, the turbulators 330 may include alternating rows of projections 340 and impressions (dimples) 350, where the rows extend in the transverse direction and can be adjacent to each other along a transverse center axis 355 of the channel (e.g., 130A, FIG. 2) in which they can be located. The dimples 350 can be in the form of scooped-out or concave hemispherical shapes (dimples) and the protrusions 340 also can be hemispherical or convex shapes. The rows of turbulators 330 can alternatively form a wedge shape 331 (FIG. 3B), a cone shape 332 (FIG. 3C) or a single large dimple 333 having a diameter that is at least half a transverse dimension of the coolant channel 130 (FIG. 3D). As shown in FIGS. 3A-3D, adjacent rows of the turbulators 330 can be transversely shifted relative to each other to provide a winding path for coolant traveling in the coolant channel 130, and thus enhance the turbulent effect in the coolant flow. A turbulator density per square unit area of the coolant channel 130 can differ from the upstream end to the downstream end of the coolant channel 130 in order to promote turbulent flow along the flow path. For example, there can be more, turbulators 330 in locations where laminar flow is likely to exist. Alternatively, the density can be provided where additional surface area into the coolant flow is desired to enhance heat transfer (e.g., downstream).

FIGS. 3A-3D show some examples of different types of turbulators for enhancing the heat transfer from the top metal plate to the coolant flow passing through the channels. A combination of different types of turbulators can be incorporated into a single cooling tray design. The arrangement of turbulators can be provided to alter the local heat transfer characteristics to accommodate any specific cooling requirement by the battery module design. For example, the size, height, pitch of the turbulator can be varied along the flow direction to compensate for the decreasing heat removal due to temperature rise in coolant flow. For example, ones or rows of the turbulators 332A (FIG. 3C) that can be closer to the downstream end 250 of the channel 130 can have a greater height than ones or rows of the turbulators 332B that can be closer to the upstream end 240 of the channel 130. That is, at least two of the turbulators 330 can have a differing size, shape, pitch, yaw or roll orientation relative to each other, discussed in greater datil below). Alternatively or in addition thereto, as indicated, a turbulator density per square unit area of the coolant channel 130 can differ from the upstream end to the downstream end of the coolant channel 130.

That is, e.g., for at least two of the turbulators in a channel, a size, shape or orientation within the coolant channel 130 can differ from each other. This type of design can be used to provide uniform heat extraction from the battery module/pack 140 (FIG. 1).

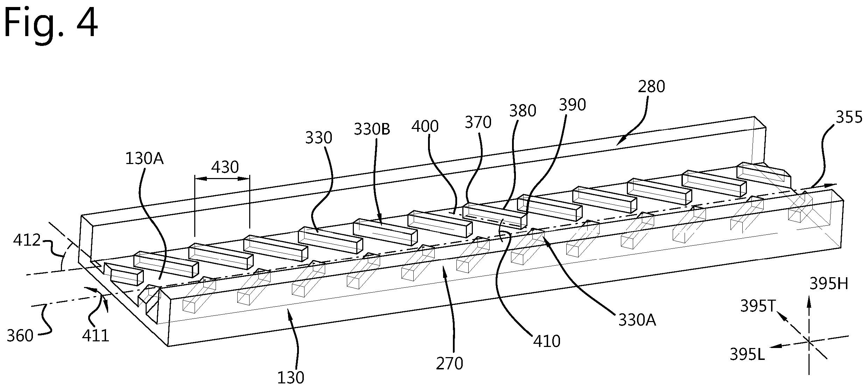

As shown in FIGS. 4-10, in embodiments, the turbulators 330 include a first set of turbulators 330A distributed along the first transverse side 270 of the coolant channel 130, between the upstream and downstream ends 240, 250 of the coolant channel 130 (FIG. 2). A second set of turbulators 330B is distributed along the second transverse side 280 of the coolant channel 130, between the upstream and downstream ends 240, 250 of the coolant channel (FIG. 2). As can be appreciated, one channel 130A of the coolant channel 130 is shown in FIGS. 4-10.

The first and second sets of turbulators 330A, 330B can be transversely spaced apart from each other to define a center flow path 360 therebetween, extending from the downstream end 250 to the upstream end 240 of the coolant channel 130.

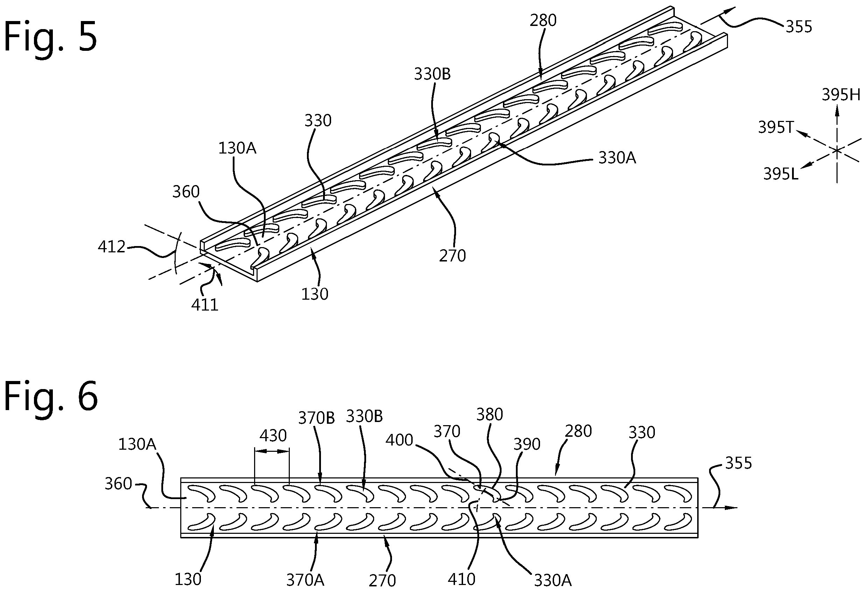

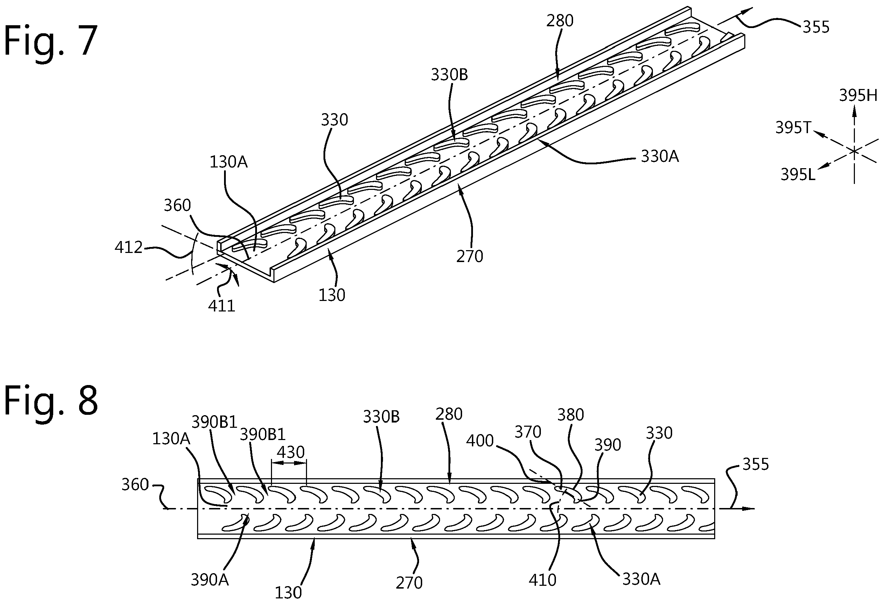

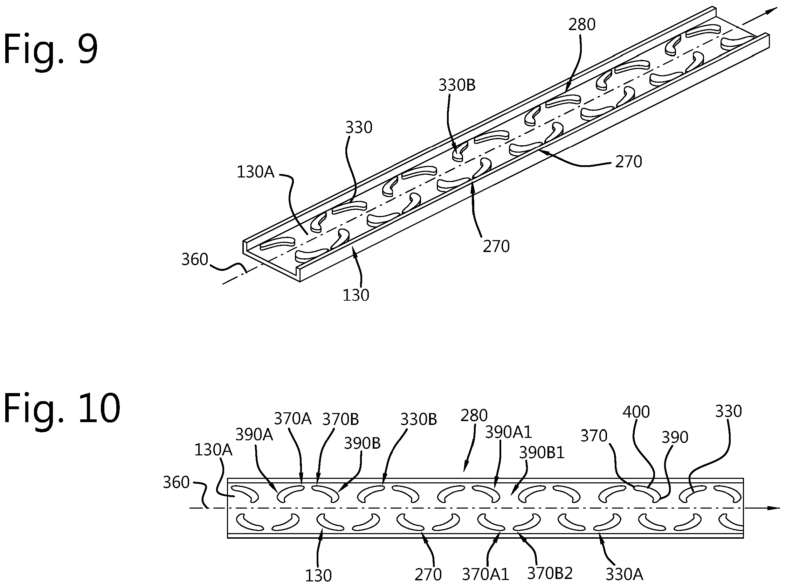

The turbulators 330 can be shaped as a rectangular rib (FIG. 4) or an airfoil (FIGS. 5-10). The turbulators 330 can be boomerang or chevron shaped along a cross-section parallel to the first plane (395L x 395T shown for reference in FIG. 4). The airfoil can be symmetrical or asymmetrical. The airfoil shape can be orientated with respect to the flow direction in a way to provide a smooth converging section for the flow to create vertices which will help increase the heat transfer and limit the pressure drop across the channel. With the airfoil turbulator configuration of FIGS. 5 and 6 the turbulators 330 can be arranged in a repeating pattern to form a converging section in the upstream direction, which can provide a maximum turbulence and high heat removal rate. This configuration can also lead to relatively higher-pressure drop. With the airfoil turbulator configuration of FIGS. 7 and 8, the turbulators 330 on one side of the channel 130A can be offset relative to the other side to facilitate the mixing of flow from the first set of turbulators 330A to the second set of turbulators 330B. Due to offset configuration, there is sufficient forward flow of the coolant leading to a relatively lower pressure drop. With the airfoil turbulator configuration of FIGS. 9 and 10, the turbulators 330 can be arranged in a manner to increase the overall flow length for the coolant along the channel. This arrangement could lead to a relatively lower pressure drop.

In addition to above variations in configurations of the shape and orientation of the turbulators 330, it also within the scope of the disclosure to vary the height of the turbulators as indicated with FIG. 3C, above. That is shorter turbulators 330 can be located at a downstream end of the channel 130A and taller turbulators 330B can be locate at an upstream end of the channel 130A to keep the heat transfer relatively constant throughout the length of the channel.

As labeled in FIGS. 4, 6, 8, and 10, each of the turbulators 330 defines a leading edge 370, and a turbulator body 380 extending from the leading edge 370 to a trailing edge 390. As labeled in FIGS. 4, 6 and 8, a turbulator body axis 400 is defined between the leading and trailing edges 370, 390.

A yaw angle 410 is defined by a rotation of the turbulator body axis 400, when formed, relative to the channel transverse center axis (or channel center axis) 355 (or axis parallel to it) in a plane extending in the transverse direction 395T and the lengthwise direction 395L (i.e., a first plane). For example, changing the yaw angle 410 of a turbulator results in repositioning of the leading and trailing edges of a turbulator along a floor of the channel 130A. That is, such repositioning would be equivalent to a cylinder that extends heightwise from the floor of the channel 130A being turned about its center axis. The yaw angle 410 can be empirically measured for any turbulator shape that has any type of asymmetry when viewed along the heightwise direction 395H toward the first plane (e.g., a viewpoint from above the channel 130A).

A roll angle 411 is defined by a rotation of the turbulator body axis 400, when formed, about the channel center axis 355 (or axis parallel to it) in a plane extending in the transverse direction 395T and in the heightwise direction 395H (i.e., a second plane). For example, changing the roll angle 411 of a turbulator results in repositioning of side portions of a turbulator, e.g., by lowering one side of the turbulator relative to the floor of the channel 130A and raising the other side relative to the floor. That is, such repositioning would be equivalent to a cylinder that extends lengthwise along the floor of the channel 130A being turned about its center axis. The roll angle 411 can be empirically measured for any turbulator shape that has any type of asymmetry when viewed along the lengthwise direction 395L of the channel 130A toward the second plane (e.g., from the viewpoint of the lengthwise ends of the channel 130A).

A pitch angle 412 is defined by a rotation of the turbulator body axis 400, when formed, about the channel center axis 355 (or axis parallel to it) in a plane extending in the lengthwise direction 395L and heightwise direction 395H (i.e., a third plane). For example, changing the pitch angle 412 of a turbulator results in repositioning the leading and trailing edges of a turbulator, e.g., by lowering one of the leading and trailing edges of the turbulator relative to the floor of the channel 130A and raising the other of the leading and trailing edges relative to the floor. That is, such motion would be equivalent to a cylinder that extends transversely along the channel 130A being turned about its center axis. The pitch angle 412 can be empirically measured for any turbulator shape that has any type of asymmetry when viewed along the transverse direction 395T of the channel 130A toward the third plane (e.g., from the viewpoint of the transverse sides 270, 280 of the channel 130A).

None of the turbulators identified in this disclosure have an infinite number of lines of symmetry. Thus, each of the turbulators identified in this disclosure can be repositioned due to a change of a yaw, roll or pitch angle.

As shown in FIGS. 4, 6 and 8, in the first and second sets of turbulators 330A, 330B, each leading edge 370 is adjacent a respective transverse side of the channel 130A and each trailing edge 390 is adjacent the channel center axis 355. In the first and second sets of turbulators 330A, 330B, each of the turbulators 330 is disposed at a same yaw, roll and pitch angles 410, 411, 412, though this is not intended on limiting the scope of the embodiments. As shown, the turbulator body axis 400 can be configured at a yaw angle 410 so that transversely adjacent turbulators 330 converge in the upstream direction. The turbulators 330 can be space apart from each other along the channel center axis 355 by a same distance 430, e.g., measured between the leading edge 370 of adjacent turbulators 330. It is withing the scope of the embodiments for the tabulations to be spaced apart by mutually unique or a plurality of unique distances.

As shown in the embodiments in FIGS. 4 and 6, the leading edge 370 (e.g., edges 370A, 370B in FIG. 6) of each transversely adjacent turbulator 330 is aligned with each other along the channel center axis 355. Alternatively, as shown in the embodiment in FIG. 8 the trialing edge 390 of each transversely adjacent turbulator 330 is offset from each other along the channel center axis 355. For example the trailing edge 390A of one of the turbulators 330 in the first set 330A is halfway between the trailing edges 390B1, 390B2 of turbulators 330 in the second set 330B (FIG. 8), though this offset is not intended on limiting the scope of the embodiments. With this embodiment, the spacing-pitch of the airfoils is modified to generate turbulence while maintaining the flow rather completely restricting it. This way pressure drop can be controlled and turbulence that is needed can be increased to increase a heat transfer (via increasing a heat transfer coefficient) for cooling.

Turning to the embodiment in FIGS. 9-10, as indicated, the turbulators 330 can be airfoil shaped and include a leading edge 370 that defines a blunt-nosed edge, a body 400 and a trailing edge 390 that defines a tapered edge. In each of the first and second sets of turbulators 330A, 330B, adjacent pairs of the airfoil shaped turbulators can be configured so that the leading edges 370, e.g., edges 370A, 370B, can be adjacent to, and face each other, along the channel center axis 355. Trailing edges 390, e.g., edges 390A, 390B can be spaced apart from each other along the channel center axis 355. In addition, the trailing edges 390 of the turbulators in both sets 330A, 330B can be adjacent to the channel center axis 355. The leading edges 370 of the first set 330A of turbulators can be adjacent to the first transverse side 270 of the coolant channel 130. The leading edges 370 of the second set 330B of turbulators can be adjacent to the second transverse side 280 of the coolant channel 130.

The turbulators 330 in the first set 330A can be offset from turbulators 330 in the second set 330B along the channel center axis 355 so that pairs of the leading edges 370 (e.g., 370A1, 370B1) of the turbulators in the first set 330A can be located between (e.g., halfway between) adjacent pairs of the trailing edges 390 (e.g., 390A1, 390B1) of the turbulators in the second set 330B.

It is within the scope of each embodiment herein for the turbulators to be connected to the plate or the seal rather than the base. The tabulators can be formed as part of the plate, base or seal or can be attached after formation. It is to be appreciated that by providing differing heights to the turbulators and different spacings between the turbulators, the channel is configured to provide higher-turbulence portion and a lower-turbulence portion. The base, as indicated, contains cooling channels and the turbulators may include a combination of different types of protrusions, dimples or other turbulators (ribs or airfoils, for example) to enhance heat transfer. The arrangement, size, height, and/or pitch of the said protrusions, dimples or other turbulators can be varied to accommodate any specific cooling requirement by the battery module design.

As indicated above, the embodiments disclosed herein relate to a hybrid cooling tray design for an electric vehicle battery module. The cooling tray has of a top (or cover) that is a metal (aluminum) plate and a bottom polymer (e.g., plastic) base (or tray) with channels for coolant to pass through. The plate and base can be bonded by an adhesive to prevent coolant leakage. The turbulators can be joined to the cover. The turbulators can be bonded to the cover. Bonding can include welding and/or adhesive bonding. The parts can also be clamped together and sealed with an elastomeric ring or gasket. The base can be configured with a coolant channel layout that provides for cooling/heating of battery module. The base allows incorporation of turbulator features to enhance heat transfer performance. The base allows for an arrangement of turbulator features that reduce a temperature gradient in the battery module. The base, manufactured of a material with a low thermal conductivity, provides an effective thermal insulation to reduce heat transfer with the environment. The embodiments herein provide an optimized design of a coolant channel layout that can be incorporated to enhance overall heat transfer performance while maintaining reasonable pressure drop.

### EXAMPLES

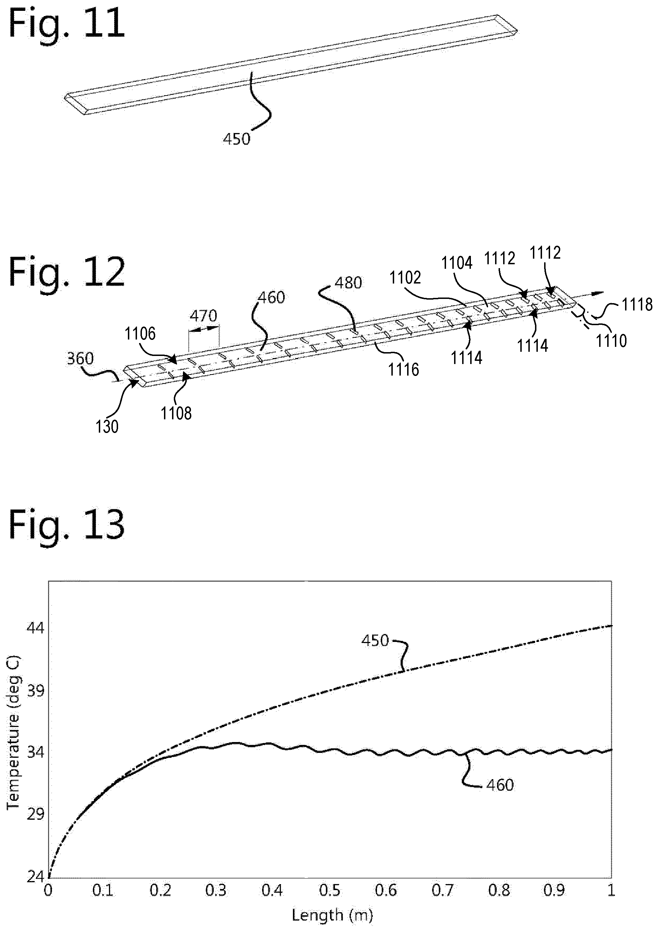

FIGS. 11 and 12 shows first and second designs 450, 460 of coolant channels for comparison. The simple straight channel of the first design 450 is used as the baseline case to compare the performance of an alternative design with rib turbulators of the second design 460. The rib turbulators are disposed in symmetrical pairs across the channel 130. A first set of the rib turbulators1112 can be disposed along a first channel portion 1106 on one side of the channel 130. A second set of rib turbulators 1114 can be disposed in a second channel portion 1108. The first set of rib turbulators 1112 can mirror the second set of rib turbulators 1114, such as alongside a plane that is perpendicular to a bottom 1104 and generally parallel the flow direction 360. The first set of rib turbulators 1112 can be spaced apart from the second set of rib turbulators 1114. The first set of rib turbulators 1112 can be spaced apart from a wall 1102. The second set of rib turbulators can be spaced apart from a wall 1116. Each of the rib turbulators of a set can be angled 1110 with respect to a datum 1118 that extends transverse the channel 130.

In this example, varying pitch distance 470 and increasing a height of the turbulator 480 (e.g., ribs) (e.g., in a base thickness direction) along the length or flow direction 480 is utilized to minimize the temperature variation at the cooling surface. The turbulators can increase in pitch distance and/or height from one to the next along a length of the channel 130. Computational fluid dynamic (CFD) simulation is used to examine the performance. The coolant of 50% water-glycol solution at 20 degrees C passes through the channel with a mean velocity of 0.1m/s. A constant temperature of 30 degrees C at the surface of aluminum plate in contact with the coolant flow is assumed to examine the overall heat transfer performance. The overall heat transfer coefficient from the hot aluminum plate to the coolant flow is calculated to be 702 W/m2-K and 1160 W/m2-K for the baseline case and the second design 460 respectively. About 65% enhancement in the heat transfer coefficient is seen due to the incorporation of rib turbulators. Considering the pressure drop of 146 Pa/m and 198 Pa/m for the baseline case and the second design 460, the later provides better thermal-hydraulic performance.

Conjugate heat transfer is considered and the battery module in contact with a top 2mm aluminum plate is simplified as a heat source with constant heat flux of 10000W/m2 which simulates a quick heat buildup during fast charge of the battery. Figure 13 shows a temperature distribution along the top aluminum plate for both designs 450, 460. Except the entrance region, the customized arrangement of rib turbulators effectively minimizes a temperature variation at a cooling surface, which helps to maintain a uniform temperature distribution in the battery module.

In some embodiments, the base of the tray is made of thermoplastic material, as for example polypropylene with low specific gravity or thermally conductive polycarbonate, such as enUL94 V0 polyolefin compounds with high specific strength and specific stiffness, UL94 V0 high flow engineering thermoplastic compounds with good adhesive compatibility for thin gauge internal components, and any of a family of polyester compounds with low temperature ductility for impact absorbers. LEXAN 945 and CYCOLOY 7240 are also potential materials.

In some embodiments, some or all the thermoplastic material parts of the assembly may comprise one or more of the following: additives and/or stabilizers like anti-oxidants, UV stabilizers, pigments, dyes, adhesion promoters, and a flame retardant e.g. mixture of an organic phosphate compound (for example piperazine pyrophosphate, piperazine polyphosphate and combinations thereof), an organic phosphoric acid compound (for example phosphoric acid, melamine pyrophosphate, melamine polyphosphates, melamine phosphate) and combinations thereof, and zinc oxide, and/or a filler, e.g., fibers. For example, a fiber-filled polyolefin can be used. Possible fiber material may include at least one of glass, carbon, aramid, or plastic, preferably glass. The fiber length can be chopped, long, short, or continuous. In particular, long glass fiber-filled polypropylene (e.g. STAMAX^{™} available from SABIC) can be used. Long fibers can be defined to have an initial fiber length, before molding, of at least 3 mm.

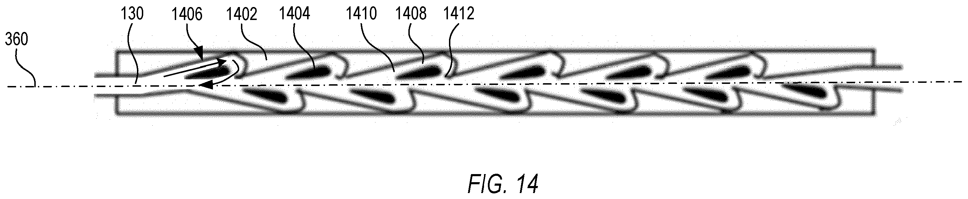

FIG. 14 shows a top view of flow-reversing turbulators comprising tesla valves, according to some examples. A channel 130A leads to turbulators 1406. The turbulators 1406 can comprise a recess 1406, with an aerofoil 1404 shaped to nest in the recess, defining a gap 1408 between the two. The gap can be relatively uniform in width along its length from an gap entry 1410 to a gap exit 1412. The turbulators thus comprise one or more Tesla valves disposed along a length of the channel 130A.

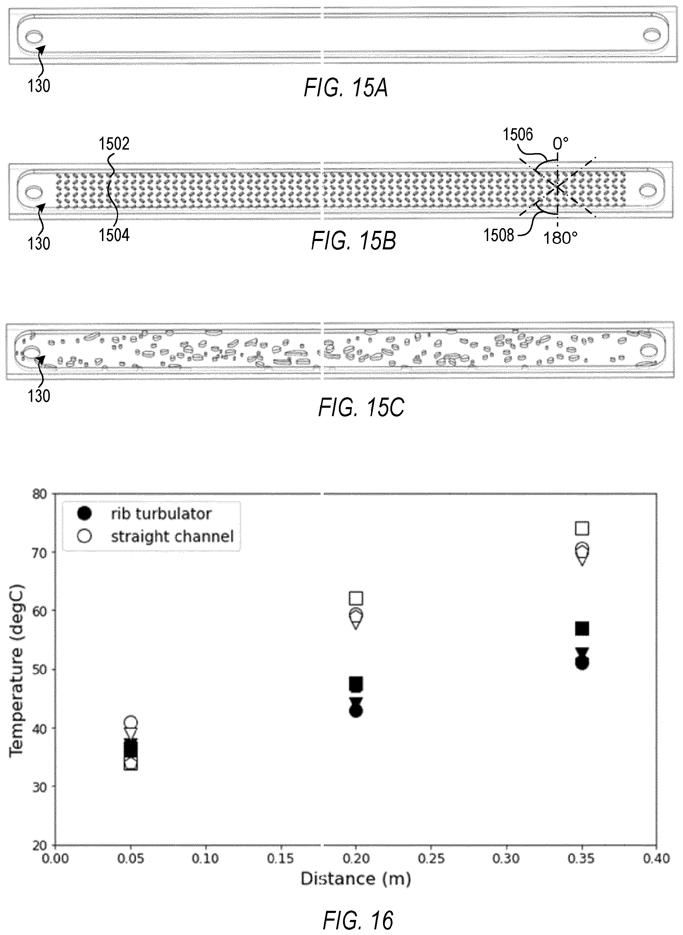

FIG. 15A shows a baseline straight channel. FIG. 15B shows a rib turbulators, according to an example. FIG. 15C shows a topology optimized design. Different types of turbulators are evaluated using CFD simulations including rib turbulator and a customized design based on the topology optimization combining CFD and artificial intelligence using a generative design software, Diabatix. The top surface of the aluminum plate maintains a constant temperature of 30°C and an ethylene glycol solution at 20°C passes through the cooling plate with a flow rate of 2 LPM. With reference specifically to FIG. 15B, the cooling channel 130 includes a lengthwise first column of rib turbulators 1502 that are parallel to one another, each having the same or comparable first yaw angles 1506 starting from 0 degrees. The first column is symmetrical with a second or adjacent column 1504. The adjacent column can have rib turbulators disposed at a second yaw angle, similar in magnitude as the first yaw angle, but subtracted from 180 degrees versus being added to the 0 degrees used to measure the first yaw angle. The rib turbulators can form rows across the columns, with the rows being parallel or substantially parallel to a wall of the coolant channel 130. The can be gaps between each column. There can be gaps between each row.

Table 1 summarizes the key results from the simulations of different designs including pressure drop and heat removal. The topology optimization design and rib turbulator design both show higher heat removals than the baseline straight channel with increased pressure drops. The overall thermal performance is calculated which shows about 40% and 50% improvements for the topology optimization design and rib turbulator design compared to the baseline case. In addition, the incorporation of turbulators leads to more uniform heat removal which is beneficial to the battery efficiency and longevity.

Table 1 shows simulation results for different designs:

**Table 1**

| Flow rate: 2 lpm | Topology optimization | Rib | Baseline |
|---|---|---|---|
| DP (Pa) | 2265 | 3328 | 1459 |
| Q (W) | 227.7 | 277 | 142 |

FIG. 16 shows data pertaining to FIGS. 15A-C, and includes experimental measurements of aluminum plate surface temperature for different designs, including the designs for FIG. 15A and FIG 15B.

Experimental tests of the hybrid cooling plate concept were conducted for different designs. With a constant flux heater attached to the hybrid cooling plate, the surface temperature of the top aluminum plate was measured at different locations, i.e. near the flow inlet, in the middle, and near the flow outlet. Significant enhancement in the local heat transfer coefficient was achieved for the rib turbulator design compared to the straight channel which led to lower surface temperature in the middle and near the flow outlet as shown in the figure below.

The term "battery" is defined herein to include all kind of batteries, preferentially but not limited lithium ion batteries, in particular the one comprising pouch battery cell(s), which may undergo swelling due to the buildup of pressure within the cell. Swelling may result in shifting of the internal components of the pouch cells. For example, the electrode of the pouch cell may separate, degrading the chemical properties of the prismatic cell. Further, uncontrolled swelling of the pouch cells may drastically decrease their efficiency and product life. Accordingly, it would be desirable to provide compression to the pouch cells to protect their chemical integrity, and thus their efficiency and product life.

The term "battery pack" is defined herein to include a battery enclosure containing a battery according to various examples.

The term "Electric vehicle battery assembly" is defined herein to include at least a battery pack surrounded by a frame to maintain it, an upper enclosure and a lower enclosure.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A hybrid cooling tray (100) for a battery pack, the tray comprising:
a cover plate (110) formed of a metallic material that is thermally conductive; and
a base (120) coupled to the thermally conductive cover plate, the base formed of a polymer, the base defining a first end and a second end that are lengthwise spaced apart from each other and a first side and a second side that are widthwise spaced apart from each other, and wherein the base defines an inner surface and an outer surface,
wherein the cover plate and the inner surface of the base define a coolant channel having an upstream end configured to receive a coolant flow and a downstream end configured to discharge the coolant flow, wherein the coolant channel defines a first transverse side and a second transverse side that extend between the upstream and downstream ends,
wherein solid turbulators (330) are molded into the coolant channel between the upstream and downstream ends and define one or more of projections out of the base and impressions into the base,
the cooling tray being **characterized in that**
(i) at least two of the turbulators have a differing size, shape, pitch, yaw or roll orientation relative to each other; or
(ii) a turbulator density per square unit area of the coolant channel differs from the upstream end to the downstream end of the coolant channel;
and **in that** the turbulators include:
a first set of turbulators distributed along the first transverse side of the coolant channel, between the upstream and downstream ends of the coolant channel; and
a second set of turbulators distributed along the second transverse side of the coolant channel, between the upstream and downstream ends of the coolant channel,
wherein the first and second sets of turbulators are transversely spaced apart from each other to define a center flow path therebetween extending from the downstream end to the upstream end of the coolant channel.

2. The tray of claim 1, wherein
ones of the turbulators that are closer to the downstream end of the channel have a greater height than ones of the turbulators that are closer to the upstream end of the channel.

3. The tray of any preceding claim, wherein
each of the turbulators is shaped as a rectangular rib or an airfoil, such that:
each of the turbulators defines a leading edge, a turbulator body extending from the leading edge to a trailing edge, wherein a turbulator body axis is defined between the leading and trailing edges.

4. The tray of any preceding claim, wherein
in the first and second sets of the turbulators:
transversely adjacent turbulators converge in the upstream direction;
the turbulators are space apart from each other along the transverse center axis by a same distance; and
either:
the leading edge of each transversely adjacent turbulator is aligned with each other along the transverse center axis; or
the leading edge of each transversely adjacent turbulator is offset from each other along the transverse center axis.

5. The tray of any preceding claim, wherein
each of the turbulators is shaped as an airfoil;
in each of the first and second sets of the turbulators, adjacent pairs of the turbulators are disposed so that the trailing edges are adjacent to each other along the channel transverse center axis and leading edges are spaced apart from each other along the channel transverse center axis;
the trailing edges adjacent to the channel transverse center axis;
the leading edges of the first set of turbulators are adjacent to the first transverse side of the coolant channel; and
the leading edges of the second set of turbulators are adjacent to the second transverse side of the coolant channel.

6. The tray of any preceding claim, wherein
the turbulators in the first set of turbulators are offset from turbulators in the second set of turbulators along the channel transverse center axis so that pairs of the leading edges of the turbulator in the first set of turbulators are located between pairs of the trailing edges of the turbulator in the second set of turbulators.

7. The tray of any preceding claim, wherein
the turbulators are arranged in transverse rows, wherein adjacent rows of the turbulators are transversely shifted relative to each other, and wherein the turbulators forms a wedge shape, a cone shape or a scooped-hemisphere shape having a diameter that is at least half a transverse dimension of the coolant channel.

8. The tray of any preceding claim, wherein
alternating rows of the turbulators define scooped-hemisphere shapes and projecting hemisphere shapes.

9. The tray of any preceding claim, wherein the coolant channel is configured in a serpentine pattern such that elongate segment of the coolant channel extend lengthwise along the tray, and upstream and downstream ends of the coolant channel are both located either at the first end or second end of the tray.

10. The tray of any preceding claim, wherein the upstream end of the coolant channel includes a coolant inlet port and the downstream end of the coolant channel includes a coolant discharge port.

11. The tray of any preceding claim, wherein:
the base has a base outer perimeter shape; and
the tray includes a cover plate that has a cover plate outer perimeter shape that complements the base outer perimeter shape, the cover plate being positioned against the base to enclose the coolant channel.

12. The tray of any preceding claim, wherein the cover plate is bonded to the base with an adhesive.

13. The tray of any preceding claim, wherein the cover plate is fastened to the base and a seal member is disposed between the cover plate and the base.

14. The tray of any preceding claim, wherein the fastener is a clamp and the seal member is an elastomeric ring or gasket.

## Patentansprüche

1. Hybrid-Kühlwanne (100) für ein Batteriepack, wobei die Wanne Folgendes umfasst:
eine Abdeckplatte (110), die aus einem wärmeleitenden metallischen Material gebildet ist; und
eine Basis (120), die mit der wärmeleitenden Abdeckplatte verbunden ist, wobei die Basis aus einem Polymer gebildet ist und die Basis ein erstes Ende und ein zweites Ende definiert, die in Längsrichtung voneinander beabstandet sind, sowie eine erste und eine zweite Seite, die in Breitenrichtung voneinander beabstandet sind, und wobei die Basis eine Innenfläche und eine Außenfläche definiert,
wobei die Abdeckplatte und die Innenfläche der Basis einen Kühlmittelkanal definieren, der ein stromaufwärtiges Ende zum Aufnehmen eines Kühlmittelstroms und ein stromabwärtiges Ende zum Abgeben des Kühlmittelstroms aufweist, wobei der Kühlmittelkanal eine erste Querseite und eine zweite Querseite definiert, die sich zwischen dem stromaufwärtigen und dem stromabwärtigen Ende erstrecken,
wobei massive Turbulatoren (330) in den Kühlmittelkanal zwischen dem stromaufwärtigen und dem stromabwärtigen Ende geformt sind und einen oder mehrere Vorsprünge aus der Basis heraus und Vertiefungen in die Basis hinein definieren,
Kühlwanne **dadurch gekennzeichnet, dass**
(i) mindestens zwei der Turbulatoren eine unterschiedliche Größe, Form, Nick-, Gier- oder Rollorientierung relativ zueinander aufweisen; oder
(ii) sich eine Turbulatordichte pro Quadratflächeneinheit des Kühlmittelkanals von dem stromaufwärtigen Ende zu dem stromabwärtigen Ende des Kühlmittelkanals unterscheidet;
und dass die Turbulatoren Folgendes einschließen:
einen ersten Satz von Turbulatoren, die entlang der ersten Querseite des Kühlmittelkanals zwischen dem stromaufwärtigen und stromabwärtigen Ende des Kühlmittelkanals verteilt sind; und
einen zweiten Satz von Turbulatoren, die entlang der zweiten Querseite des Kühlmittelkanals zwischen dem stromaufwärtigen und stromabwärtigen Ende des Kühlmittelkanals verteilt sind,
wobei der erste und der zweite Satz von Turbulatoren quer voneinander beabstandet sind, um einen zentralen Strömungspfad zwischeneinander zu definieren, der sich von dem stromabwärtigen Ende zu dem stromaufwärtigen Ende des Kühlmittelkanals erstreckt.

2. Wanne nach Anspruch 1, wobei
diejenigen der Turbulatoren, die sich näher an dem stromabwärtigen Ende des Kanals befinden, eine größere Höhe als diejenigen der Turbulatoren aufweisen, die sich näher an dem stromaufwärtigen Ende des Kanals befinden.

3. Wanne nach einem vorstehenden Anspruch, wobei
jeder der Turbulatoren als eine rechteckige Rippe oder eine Tragfläche derart gebildet ist, dass:
jeder der Turbulatoren eine Vorderkante, einen Turbulatorkörper, der sich von der Vorderkante zu einer Hinterkante erstreckt, definiert, wobei eine Turbulatorkörperachse zwischen der Vorderkante und der Hinterkante definiert ist.

4. Wanne nach einem vorstehenden Anspruch, wobei
in dem ersten und dem zweiten Satz der Turbulatoren:
quer angrenzende Turbulatoren in der stromaufwärtigen Richtung konvergieren;
die Turbulatoren voneinander entlang ihrer Quermittelachse um denselben Abstand beabstandet sind; und
entweder:
die Vorderkante jedes quer angrenzenden Turbulators entlang der Quermittelachse miteinander ausgerichtet ist; oder
die Vorderkante jedes quer angrenzenden Turbulators entlang der Quermittelachse voneinander versetzt ist.

5. Wanne nach einem vorstehenden Anspruch, wobei
jeder der Turbulatoren als eine Tragfläche geformt ist;
in jedem des ersten und des zweiten Satzes der Turbulatoren angrenzende Paare der Turbulatoren derart angeordnet sind, dass die Hinterkanten entlang der Quermittelachse des Kanals aneinandergrenzen und die Vorderkanten entlang der Quermittelachse des Kanals voneinander beabstandet sind;
die Hinterkanten an die Quermittelachse des Kanals angrenzen;
die Vorderkanten des ersten Satzes von Turbulatoren an die erste Querseite des Kühlmittelkanals angrenzen; und
die Vorderkanten des zweiten Satzes von Turbulatoren an die zweite Querseite des Kühlmittelkanals angrenzen.

6. Wanne nach einem vorstehenden Anspruch, wobei
die Turbulatoren in dem ersten Satz von Turbulatoren von Turbulatoren in dem zweiten Satz von Turbulatoren entlang der Quermittelachse des Kanals derart versetzt sind, dass sich Paare der Vorderkanten der Turbulatoren in dem ersten Satz von Turbulatoren zwischen Paaren der Hinterkanten der Turbulatoren in dem zweiten Satz von Turbulatoren befinden.

7. Wanne nach einem vorstehenden Anspruch, wobei
die Turbulatoren in Querreihen eingerichtet sind, wobei angrenzende Reihen der Turbulatoren voneinander quer verschoben sind, und wobei die Turbulatoren eine Keilform, eine Kegelform oder eine ausgehöhlte Halbkugelform bilden, die einen Durchmesser aufweist, der mindestens der Hälfte einer Querabmessung des Kühlmittelkanals entspricht.

8. Wanne nach einem vorstehenden Anspruch, wobei
abwechselnde Reihen von Turbulatoren ausgehöhlte Halbkugelformen und vorstehende Halbkugelformen definieren.

9. Wanne nach einem vorstehenden Anspruch, wobei der Kühlmittelkanal in einem Schlangenmuster derart konfiguriert ist, dass sich ein längliches Segment des Kühlmittelkanals in Längsrichtung entlang der Wanne erstrecken, und sich die stromaufwärtigen und stromabwärtigen Enden des Kühlmittelkanals beide entweder an dem ersten oder dem zweiten Ende der Wanne befinden.

10. Wanne nach einem vorstehenden Anspruch, wobei das stromaufwärtige Ende des Kühlmittelkanals einen Kühlmitteleinlassport einschließt, und das stromabwärtigee Ende des Kühlmittelkanals einen Kühlmittelauslassport einschließt.

11. Wanne nach einem vorstehenden Anspruch, wobei:
die Basis eine Basisaußenumfangsform aufweist; und
die Wanne eine Abdeckplatte einschließt, die eine Abdeckplatten-Außenumfangsform aufweist, die zu der Basisaußenumfangsform komplementär ist, wobei die Abdeckplatte gegen die Basis positioniert ist, um den Kühlmittelkanal zu umschließen.

12. Wanne nach einem vorstehenden Anspruch, wobei die Abdeckplatte mit einem Klebstoff an der Basis befestigt ist.

13. Wanne nach einem vorstehenden Anspruch, wobei die Abdeckplatte an der Basis befestigt ist und ein Dichtungselement zwischen der Abdeckplatte und der Basis angeordnet ist.

14. Wanne nach einem vorstehenden Anspruch, wobei das Befestigungselement eine Klemme und das Dichtungselement ein elastischer Ring oder eine Dichtung ist.

## Revendications

1. Plateau de refroidissement hybride (100) pour un bloc-batterie, le plateau comprenant :
une plaque de recouvrement (110) constituée d'un matériau métallique thermoconducteur ; et
une base (120) couplée à la plaque de recouvrement thermoconductrice, la base étant formée d'un polymère, la base définissant une première extrémité et une seconde extrémité qui sont espacées longitudinalement l'une de l'autre et un premier côté et un second côté qui sont espacés latéralement l'un de l'autre, et dans lequel la base définit une surface intérieure et une surface extérieure,
dans lequel la plaque de recouvrement et la surface intérieure de la base définissent un canal de fluide de refroidissement présentant une extrémité amont configurée pour recevoir un flux de fluide de refroidissement et une extrémité aval configurée pour évacuer le flux de fluide de refroidissement, dans lequel le canal de fluide de refroidissement définit un premier côté transversal et un second côté transversal qui s'étendent entre les extrémités amont et aval,
dans lequel des turbulateurs solides (330) sont moulés dans le canal de fluide de refroidissement entre les extrémités amont et aval et définissent une ou plusieurs saillies hors de la base et des empreintes dans la base,
le plateau de refroidissement étant **caractérisé en ce que**
(i) au moins deux des turbulateurs présentent une taille, une forme, une orientation de tangage, de lacet ou de roulis différents l'un par rapport à l'autre ; ou
(ii) une densité de turbulateurs par unité de surface carrée du canal de fluide de refroidissement diffère de l'extrémité amont à l'extrémité aval du canal de fluide de refroidissement ;
et **en ce que** les turbulateurs incluent :
un premier ensemble de turbulateurs répartis le long du premier côté transversal du canal de fluide de refroidissement, entre les extrémités amont et aval du canal de fluide de refroidissement ; et
un second ensemble de turbulateurs répartis le long du second côté transversal du canal de fluide de refroidissement, entre les extrémités amont et aval du canal de fluide de refroidissement,
dans lequel les premier et second ensembles de turbulateurs sont espacés transversalement l'un de l'autre pour définir un chemin d'écoulement central entre eux s'étendant de l'extrémité aval à l'extrémité amont du canal de fluide de refroidissement.

2. Plateau selon la revendication 1, dans lequel
les turbulateurs situés plus près de l'extrémité aval du canal présentent une hauteur supérieure à celle des turbulateurs situés plus près de l'extrémité amont du canal.

3. Plateau selon une quelconque revendication précédente, dans lequel
chacun des turbulateurs présente la forme d'une nervure rectangulaire ou d'un profil aérodynamique, de sorte que :
chaque turbulateur définit un bord d'attaque, un corps de turbulateur s'étendant du bord d'attaque à un bord de fuite, dans lequel un axe du corps de turbulateur est défini entre les bords d'attaque et de fuite.

4. Plateau selon une quelconque revendication précédente, dans lequel
dans les premier et second ensembles de turbulateurs :
des turbulateurs transversalement adjacents convergent dans la direction amont ;
les turbulateurs sont espacés d'une même distance le long de l'axe central transversal ; et
soit :
le bord d'attaque de chaque turbulateur transversalement adjacent est aligné avec l'autre le long de l'axe central transversal ; soit
le bord d'attaque de chaque turbulateur transversalement adjacent est décalé par rapport à l'autre le long de l'axe central transversal.

5. Plateau selon une quelconque revendication précédente, dans lequel
chacun des turbulateurs présente la forme d'un profil aérodynamique ;
dans chacun des premier et second ensembles de turbulateurs, des paires adjacentes de turbulateurs sont disposées de sorte que les bords de fuite soient adjacents l'un à l'autre le long de l'axe central transversal du canal et que les bords d'attaque soient espacés l'un de l'autre le long de l'axe central transversal du canal ;
les bords de fuite sont adjacents à l'axe central transversal du canal ;
les bords d'attaque du premier ensemble de turbulateurs sont adjacents au premier côté transversal du canal de fluide de refroidissement ; et
les bords d'attaque du second ensemble de turbulateurs sont adjacents au second côté transversal du canal de fluide de refroidissement.

6. Plateau selon une quelconque revendication précédente, dans lequel
les turbulateurs du premier ensemble de turbulateurs sont décalés par rapport aux turbulateurs du second ensemble de turbulateurs le long de l'axe central transversal du canal, de sorte que des paires de bords d'attaque du turbulateur du premier ensemble de turbulateurs soient situées entre des paires de bords de fuite du turbulateur du second ensemble de turbulateurs.

7. Plateau selon une quelconque revendication précédente, dans lequel
les turbulateurs sont disposés en rangées transversales, dans lequel les rangées adjacentes de turbulateurs sont décalées transversalement les unes par rapport aux autres, et dans lequel les turbulateurs forment une forme de coin, une forme de cône ou une forme d'hémisphère concave présentant un diamètre qui est au moins la moitié d'une dimension transversale du canal de fluide de refroidissement.

8. Plateau selon une quelconque revendication précédente, dans lequel
l'alternance de rangées de turbulateurs définit des formes d'hémisphères concaves et des formes d'hémisphères saillants.

9. Plateau selon une quelconque revendication précédente, dans lequel le canal de fluide de refroidissement est configuré selon un motif serpentin de sorte que des segments allongés du canal de fluide de refroidissement s'étendent longitudinalement le long du plateau, et que des extrémités amont et aval du canal de fluide de refroidissement soient toutes deux situées soit à la première extrémité, soit à la seconde extrémité du plateau.

10. Plateau selon une quelconque revendication précédente, dans lequel l'extrémité amont du canal de fluide de refroidissement inclut un orifice d'entrée de fluide de refroidissement et l'extrémité aval du canal de fluide de refroidissement inclut un orifice de sortie de fluide de refroidissement.

11. Plateau selon une quelconque revendication précédente, dans lequel :
la base présente une forme de périmètre extérieur de base ; et
le plateau inclut une plaque de recouvrement dont la forme du périmètre extérieur complète celle du périmètre extérieur de la base, la plaque de recouvrement étant positionnée contre la base pour fermer le canal de fluide de refroidissement.

12. Plateau selon une quelconque revendication précédente, dans lequel la plaque de recouvrement est collée à la base avec un adhésif.

13. Plateau selon une quelconque revendication précédente, dans lequel la plaque de recouvrement est fixée à la base et un élément d'étanchéité est disposé entre la plaque de recouvrement et la base.

14. Plateau selon une quelconque revendication précédente, dans lequel l'élément de fixation est une pince et l'élément d'étanchéité est un anneau ou un joint élastomère.
